(19) Europäisches Patentamt
European Patent Office
Office européen des brevets

(11) **EP 1 716 761 B1**

(12) **EUROPEAN PATENT SPECIFICATION**

(45) Date of publication and mention
of the grant of the patent:
**01.12.2010 Bulletin 2010/48**

(51) Int Cl.:
**A23G 9/32** (2006.01)

(21) Application number: **06075777.0**

(22) Date of filing: **31.03.2006**

(54) **Frozen aerated confections and methods for production thereof**

Verfahren zur Herstellung von gefrorenen belüfteten Süssspeisen

Procédé de fabrication de confiserie glacée aerée

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.04.2005 EP 05252447**
**19.04.2005 EP 05252453**
**19.04.2005 EP 05252425**

(43) Date of publication of application:
**02.11.2006 Bulletin 2006/44**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventor: **Quail, Patricia Jill**
**Sharnbrook, Bedfordshire MK44 1LQ (GB)**

(74) Representative: **Clarke, Christopher John et al**
**Unilever Patent Group**
**Colworth House**
**Sharnbrook**
**Bedford MK44 1LQ (GB)**

(56) References cited:
EP-A- 1 212 948        DE-A1- 10 016 786
US-A1- 2005 037 111    US-A1- 2005 042 333

• PATENT ABSTRACTS OF JAPAN vol. 006, no. 106 (C-108), 16 June 1982 (1982-06-16) -& JP 57 036944 A (LOTTE CO LTD), 27 February 1982 (1982-02-27)
• PATENT ABSTRACTS OF JAPAN vol. 006, no. 149 (C-118), 10 August 1982 (1982-08-10) & JP 57 068742 A (KYODO NYUGYO KK), 27 April 1982 (1982-04-27)
• PATENT ABSTRACTS OF JAPAN vol. 2003, no. 12, 5 December 2003 (2003-12-05) -& JP 2003 250455 A (MEIJI MILK PROD CO LTD), 9 September 2003 (2003-09-09)
• PATENT ABSTRACTS OF JAPAN vol. 017, no. 315 (C-1071), 16 June 1993 (1993-06-16) -& JP 05 030902 A (ASAHI YUSHI KK), 9 February 1993 (1993-02-09)

**Description**

**Technical Field of the invention**

The present invention relates to frozen aerated confections, such as ice cream. In particular, it relates to frozen aerated confections that contain oils which are high in polyunsaturated fat, such as sunflower oil, and methods for producing them.

**Background to the invention**

Frozen aerated confections, such as ice creams, sorbets and the like are popular foodstuffs. Typically they are aerated to an overrun of about 100%. Fat is an important constituent of such confections. Conventionally, frozen aerated confections have been prepared with fats having a high proportion of saturated fat, for example dairy fat (60-65%) or coconut oil (90%), together with emulsifiers such as mono/di-glycerides of fatty acids. Typically the emulsifiers are present at about 0.1% by weight of the confection. Emulsifiers and saturated fats are conventionally considered essential for the creation of stable foams, and hence for ice cream that can be aerated to the desired overrun, and which has good consumer properties such as texture and meltdown (see for example, "Ice Cream", 6th Edition R.T. Marshall, H.D. Goff and R.W. Hartel, Kluwer Academic / Plenum Publishers, New York 2003, pages 36, 42-43 and 69 or "The Science of Ice Cream", C. Clarke, Royal Society of Chemistry, Cambridge, 2004, pages 46-48 and 62-73). Briefly, the reasons for this are as follows.

The standard manufacturing process for frozen aerated confections is described in detail in, for example, "Ice Cream", 6th Edition, chapters 6, 7 and 9. It consists of a number of steps: (i) mixing the ingredients, (ii) pasteurisation and homogenisation, (iii) ageing, (iv) aerating and partially freezing the mix in an ice cream freezer (v) drawing the partially frozen aerated confection from the freezer and (vi) hardening. Hardening is necessary because as the ice cream mix passes through the freezer, its temperature decreases and its ice content increases. This results in an increase in the viscosity of the mix, so more power is required to rotate the dasher. This extra energy is dissipated in the mix as heat, which must be removed by the refrigerant. For this reason, the partially frozen ice cream is drawn from the freezer when it reaches about -5 or -6°C (see for example page 190 of Ice Cream, 6th Edition or page 75 of "The Science of Ice Cream"). At this temperature the ice cream is soft and unstable, and it must then be further cooled ("hardened") to its storage temperature (typically -18°C or lower).

After pasteurization and homogenisation the fat exists as small droplets. Milk proteins readily adsorb to the bare surfaces of the fat droplets and stabilise the emulsion. During ageing, the emulsifiers adsorb to the surface of the fat droplets, replacing some of the milk protein. This makes the emulsion less stable because the mixed membrane of protein and emulsifiers is weaker than the membrane of protein alone. During freezing and aeration, the mix is sheared. The shear causes the fat droplets collide with each other. If emulsifiers were not added, the fat droplets would resist this coalescence, due to the strong protein membrane on the fat droplets. However, if the membrane is weakened, the fat droplets can coalesce. Thus despite their name, the function of emulsifiers in ice cream is to de-emulsify the fat. When the fat droplets are partly liquid and partly solid, they partially coalesce, i.e. they form a cluster but retain some of their individual identity. Partially coalesced fat (also known as de-stabilized or de-emulsified fat) stabilizes air bubbles. Saturated fats are conventionally used because they are mostly solid at the temperatures at which freezing and aeration take place in an ice cream freezer, and therefore they undergo partial coalescence. Liquid fat droplets on the other hand coalesce completely, which leads to an unstable air phase resulting in low overrun.

Health-conscious consumers are now looking for frozen aerated confections which have all the properties of these traditional products but which are healthier. Attempts have therefore been made to produce frozen aerated confections in which saturated fats are replaced by polyunsaturated fats. However, it has not been possible simply to replace the saturated fats in ice cream formulations with unsaturated fats (which are liquid at ambient temperatures) and obtain the desired meltdown characteristics and mouthfeel for the consumer, because unsaturated fats do not contain sufficient solid fat. The mix is difficult to aerate in the ice cream freezer and as a result, the ice cream has a very low overrun.

WO 97/30600 discloses an unaerated ice cream formulated with sunflower oil and mono/di-glycerides. Since the ice cream is unaerated, there is no need to use solid fat. JP 57/036944 describes the production of ice cream with oils that are high in polyunsaturated fatty acids, such as safflower oil and sunflower oil. It was found that an overrun of only 30% could be achieved with a standard formulation containing a conventional emulsifier. To overcome the problem of producing good ice cream with liquid fat, it was found necessary to use a specific emulsifier, namely a sucrose fatty acid ester.

EP 1212948A2 discloses cold extruded aerated compositions with at least 90% overrun and with 0.45 % by weight of an emulsifier.

JP 57/068742 discloses ice cream made from safflower oil. It was found that an overrun of at most 45% could be achieved when a glycerol fatty acid ester emulsifier was used. To produce ice cream having an overrun of more than 60% it was found necessary to add a significant amount of a non-dairy protein, such as soy protein. However, such additives can detract from the natural, dairy and healthy perception of the product by consumers and also add cost. There is a need therefore to provide frozen aerated confections containing high levels of polyunsaturated fats which have good processing and consumer properties (such as aeration, texture and meltdown), but which do not suffer from these disadvantages.

Tests and Definitions

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition. With the exception of percentages cited in relation to the overrun, all percentages, unless otherwise stated, refer to the approximate percentage by weight of the total composition.

Frozen aerated confection

The term "frozen aerated confection" as used in this specification means a sweet-tasting fabricated foodstuff intended for consumption in the frozen state (i.e. under conditions wherein the temperature of the foodstuff is less than 0°C, and preferably under conditions wherein the foodstuff comprises a significant amount of ice). Frozen aerated confections are made by freezing a pasteurised mix of ingredients. Overrun is typically produced by intentionally incorporating gas into the product, such as by mechanical agitation. The gas can be any food-grade gas such as air, nitrogen or carbon dioxide. Typical examples of frozen aerated confections include ice creams.

Fat

Fats are largely made up of triglycerides (approximately 98%), together with minor amounts of other components such as phospholipids and diglycerides. Triglycerides are esters of glycerol with three fatty acids. Fatty acids which have no carbon-carbon double bonds are said to be saturated (herein abbreviated as SAFA), whereas fatty acids that contain one or more carbon-carbon double bonds are said to be monounsaturated (abbreviated as MUFA) and polyunsaturated (PUFA) respectively. Fats that are liquid at ambient temperatures are often referred to as oils. In this specification the term "fat" includes such oils. The SAFA, MUFA and PUFA contents of fats and oils are given in "The Lipid Handbook", Second Edition, Authors Frank D Gunstone, John L Harwood, Fred B Padley, Published by Chapman & Hall 1994.
Oil bodies (also known as oleosomes, lipid bodies or spheresomes) are discrete subcellular structures found in the seeds of oilseed crops in which the oil is naturally encapsulated by a monolayer of phospholipids in which proteins (known as oleosins) are embedded. As used herein, the term fat refers to fats and oils extracted from such sources, and therefore does not include oil bodies.

Milk Proteins

Sources of milk protein include milk, concentrated milk, milk powders (such as skimmed milk powder), caseins, caseinates (such as sodium and/or calcium caseinates) whey, whey powders and whey protein concentrates/isolates. Sources of milk protein generally also comprise other materials. For example, skimmed milk powder typically comprises 37% milk protein, 55% lactose and 8% milk minerals.

Sweetener

Sweetener means a mono-, di- or oligo-saccharide containing from three to ten monosaccharide units joined in glycosidic linkage, or a corn syrup, or a sugar alcohol, or a mixture thereof. Sweeteners include sucrose, fructose, lactose (for example from the source of milk protein), dextrose, invert sugar, corn syrup and sorbitol.

Free Sugars

The term "free sugars" is defined as in "Diet, nutrition and the prevention of chronic diseases" - Report of a Joint WHO/FAO Expert Consultation, WHO Technical Report Series 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or milk.

Emulsifiers

Emulsifiers are described in "Ice Cream", 6th Edition, pages 85-86. The term "emulsifier" as used herein includes mono- and di-glycerides of saturated or unsaturated fatty acids (e.g. monoglyceryl palmitate - MGP), polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80), sucrose esters, lecithin, egg, egg yolk and surface active proteins and protein derivatives (other than milk protein), for example soy protein and whipping agents derived from soy protein. The term also includes mixtures of any the above. However, the term "emulsifier" as used herein does not include milk proteins. As pointed out above, fats and oils may include small amounts of substances such as mono or diglycerides or phospholipids. The term "emulsifier" does not include such molecules when they are naturally present in the fat in small quantities.

Overrun

The overrun of ice cream (and other frozen aerated confections) is defined by

$$\text{overrun \%} = \frac{\text{density of mix} - \text{density of ice cream}}{\text{density of ice cream}} \times 100$$

Overrun is measured at atmospheric pressure.

Measuring overrun

The density of the unaerated mix is determined by weighing a standard overrun cup containing mix at approximately 4°C, subtracting the mass of the cup and dividing by the known volume of the cup (density = mass/volume). A minimum of three repeat measurements is taken. The density of the (aerated) ice cream is determined by repeating the procedure using the same overrun cup with freshly drawn ice cream (at typically -5°C to -6°C). Again a minimum of three repeat measurements is taken. With a knowledge of the density of both unaerated mix and aerated ice cream, the overrun can be calculated using the equation given above.

Meltdown

Resistance to meltdown and to serum leakage is determined by measuring the rate at which ice cream melts in a constant temperature environment, as follows. Stainless steel wire mesh grids having a size of 25 x 25 cm, with 3mm holes, 1 mm thick wire are placed on a 60° funnel with a bore size of 2cm suspended over a collecting vessel (of large enough volume to collect the entire sample tested). The collecting vessel is placed on a balance for weighing the material collected in the vessel. The balances are connected to a data logging system to record the mass collected. The apparatus consisting of grid, funnel, vessel and balance, is contained in a cabinet set at a constant temperature of 20 °C. The cabinet is capable of holding up to 12 of these sets of apparatus simultaneously.

Ice cream samples in the form of rectangular blocks measuring 14.5 x 9 x 3.8cm are equilibrated in a freezer at -25 °C, and then weighed on a zeroed balance with the grid (one of the largest flat faces of the sample is in contact with the grid). The samples are then arranged randomly over the available positions in the meltdown cabinet. Once all samples are in place on the funnels, the data logging system records the amount of collected material every minute. From the mass of the sample collected over this period, the percentage mass loss of the samples is calculated using the following formula.

$$\%\text{MassLoss} = \frac{M_t - M_0}{F} \times 100$$

wherein:

$M_t$ = mass recorded on the balance (gram) at time t minute
$M_0$ = mass recorded on the balance (gram) at start of analysis, t = 0 minute
F = Initial mass of product (gram)

Meltdown initiation time

The meltdown initiation time is defined as the time that elapses before 4% of the initial weight of the sample has dropped into the collecting vessel. At least three samples are measured per product, and the mean of these is recorded.

Brief description of the invention

Contrary to conventional wisdom, we have found that palatable and stable aerated frozen confections that contain significant amounts of polyunsaturated fat can be prepared when the confection is substantially free from emulsifier, provided that the temperature at which the frozen aerated confection is drawn from the ice cream freezer is below -4.0°C. Accordingly, in a first aspect the present invention provides a frozen aerated confection comprising water; a fat component in an amount of 2 to 12% by weight of the frozen aerated confection wherein at least 35% by weight of the fatty acids in the fat component are polyunsaturated; less than 0.04% emulsifier by weight of the frozen confection; milk protein; and sweetener; characterised in that the frozen aerated confection has an overrun of from 60 to 200%.

Preferably the frozen aerated confection comprises less than 0.02%, more preferably less than 0.01% total emulsifier by weight of the frozen confection. Most preferably, the frozen aerated confection contains no emulsifier. Emulsifiers in such compositions can result in ice cream with poor aeration and texture, and can also detract from the natural, dairy image of the product.

The higher the amount of polyunsaturated fatty acids, the greater the health benefit. Thus it is preferable that the fat comprises at least 40% polyunsaturated fatty acids by weight of the fat, more preferably at least 45% or 50% and optimally at least 60%.

Preferably the fat comprises at least 80% more preferably at least 90%, and even more preferably at least 95% by weight of the fat of a vegetable oil selected from the group consisting of sunflower oil, safflower oil, linseed oil, soybean oil, walnut oil, corn oil, grape seed oil, sesame oil, wheat germ oil, cottonseed oil and mixtures thereof. Particularly preferred is sunflower oil owing to its clean flavour, high poly-unsaturated fat content and wide availability.

Preferably the fat component comprises at least 4% fat by weight of the confection, more preferably at least 6%. Preferably the fat component comprises at most 10% fat by weight of the confection, more preferably at most 9%.

Preferably the overrun is at least 70%, more preferably at least 80%. It is preferable that the overrun does not exceed 150%, however, otherwise the confection does not exhibit the cold mouth-feel conventionally associated with frozen confections. More preferably the overrun is less than 130%.

In order to aid in aeration during manufacture of the frozen confection it is preferable that the confection comprises milk protein in an amount of at least 1% by weight of the frozen confection, more preferably greater than 2%. In order to prevent the confection from exhibiting a chalky mouth-feel, however, it is also preferable that the protein content is less than 8%, more preferably less than 6% by weight of the frozen confection. Milk proteins provide good flavour, heat stability and surface activity.

Preferably the frozen aerated confection contains substantially no protein other than milk proteins, for example less than 0.5% by weight of proteins other than milk protein.

In order to provide the customary sweetness associated with frozen aerated confections and to avoid the confection being unduly hard, it is preferable that the frozen aerated confection comprises sweeteners in an amount of at least 10% by weight of the frozen confection, more preferably at least 15%, most preferably at least 17%. To avoid the frozen aerated confection being too sweet, the amount of sweeteners should be at most 35%, preferably at most 30%, most preferably at most 25% by weight of the confection.

A preferred sweetener is lactose, especially when added as part of the milk solids. This is because lactose has a relatively low molecular weight (and therefore provides excellent freezing point depression) but is neither overly sweet nor counted among the unhealthy free sugars (when added as part of the milk solids). Thus it is preferable that lactose is present in an amount of at least 3% by weight of the frozen confection, preferably at least 4%. In order to avoid crystallisation of the lactose, however, it is also preferred that the lactose is present in an amount of less than 9%, preferably less than 8% by weight of the frozen confection.

In order to increase the appeal of the frozen aerated confection to health conscious consumers, it is preferable that the amount of free sugars is less than 17% by weight of the frozen aerated confection, preferably less than 15%.

The frozen aerated confections may include optional ingredients e.g. stabilisers, such as alginates, gum arabic, gum ghatti, gum karaya, gum tragacanth, locust bean gum, carrageenans, xanthan gum, guar gum, gelatine, agar, sodium carboxymethylcellulose, microcrystalline cellulose, methyl and methylethyl celluloses, hydroxypropyl and hydroxypropylmethyl celluloses, low and high methoxyl pectins and mixtures thereof.

The frozen aerated confections may also include colours and flavours. We have found that frozen aerated confections according to the invention have a good taste even though they contain no milk fat provided that flavours are added.

Preferably the frozen aerated confection has a meltdown initiation time of greater than 40 minutes, more preferably greater than 50 minutes, even more preferably greater than 60 minutes, most preferably greater than 70 minutes when measured at 20°C in the test described above. We have found that ice creams made from fats rich in polyunsaturated fatty acids have increased meltdown initiation times when they are drawn from the ice cream freezer at low temperatures.

in a second aspect the present invention provides a process for manufacturing a frozen aerated confection comprising the steps of:

a) producing a mix comprising water; a fat component in an amount of 2 to 12% by weight of the frozen aerated confection wherein at least 35% by weight of the fatty acids in the fat component are polyunsaturated; less than 0.04% emulsifier by weight of the frozen confection; milk protein; and sweetener;
b) homogenising and pasteurising the mix;
c) freezing and aerating the mix in an ice cream freezer to form a frozen aerated confection; and
d) drawing the frozen aerated confection from the ice cream freezer
characterized in that the frozen aerated confection has an overrun of from 60 to 200% and is drawn from the ice cream freezer at a temperature of below -4.0°C

Preferably the frozen aerated confection is drawn from the ice cream freezer at a temperature of below -5.0°C, more preferably below -6.0°C, -6.5°C -7.0°C or -7.5°C, most preferably below -8.0°C. It has been found that the lower the temperature at which the frozen aerated confection is drawn from the freezer, the slower the meltdown of the hardened frozen aerated confection.

Preferably the process further comprises hardening the frozen aerated confection after step (d). Typically the hardening temperature is in the range -17 to -40°C, preferably -20 to - 35°C.

In a third aspect the present invention provides a product obtained by the methods of the invention. Also provided is a product obtainable by the methods of the invention.

**Detailed description of the invention**

The present invention will be further described in the following examples which are illustrative only and non-limiting, and by reference to the figures which show meltdown results for ice creams according to the invention.

Figure 1 is a plot of the meltdown results for ice creams with formulation 1 drawn from the ice cream freezer at temperatures of-5.8, -7.4 and-8.3°C.

Figure 2 is a plot of the meltdown results for ice creams with formulation 2 drawn from the ice cream freezer at temperatures of -5.0, -6.3 and -7.1°C.

Figure 3 is a plot of the meltdown results for ice creams with formulation 3 drawn from the ice cream freezer at temperatures of -5.3, -6.6 and -7.4°C.

Figure 4 is a plot of the meltdown results for ice creams with formulation 4 drawn from the ice cream freezer at temperatures of -4.8, -6.0 and -6.6°C.

Figure 5 is a plot of the meltdown results for ice creams with formulation 5 drawn from the ice cream freezer at temperatures of -4.4, -5.6 and -6.2°C.

Figure 6 is a plot of the meltdown results for ice cream with formulation 2 frozen and aerated using a closed dasher and drawn from the ice cream freezer at temperatures of - 5.6, -6.6 and -7.6°C.

**Examples**

Ice cream mixes were prepared from five different ice cream formulations labelled 1-5 in Table 1. These differ in their sugars, total solids, milk proteins and fat contents. None of the formulations contains any emulsifier.

Table 1 Mix formulations (ingredient amounts are % w/w).

| Formulation | 1 | 2 | 3 | 4 | 5 |
|---|---|---|---|---|---|
| Skimmed milk powder | 5.0 | 5.0 | 5.0 | 10.00 | 10.44 |
| Whey powder (30% protein) | 5.0 | 5.0 | 5.0 | | |
| Sucrose | 5.0 | 11.0 | 10.5 | 13.00 | 13.56 |
| Dextrose | 5.8 | | | | |
| Fructose | 4.4 | | | | |
| Raftilose P95 | 4.0 | | | | |
| 63DE corn syrup | | 10.5 | 10.5 | | |
| 38DE corn syrup | | | | 4.00 | 4.17 |
| 28DE corn syrup | | | 4.0 | | |
| Locust bean gum | 0.25 | 0.25 | 0.25 | 0.144 | 0.15 |
| Guar gum | 0.11 | 0.11 | 0.11 | | |
| Carrageenan | 0.035 | 0.035 | 0.035 | 0.016 | 0.017 |
| Sunflower oil | 8.0 | 8.0 | 8.0 | 8.0 | 4.0 |
| Vanillin | 0.012 | 0.012 | 0.012 | 0.012 | 0.012 |
| Vanilla flavour | 0.1729 | 0.1729 | 0.1729 | | |
| Water | to 100 | to 100 | to 100 | to 100 | to 100 |

Raftilose P95 is 95% oligofructose in powder form supplied by Orafti. The corn syrups were supplied by Cerestar. 63DE is a glucose-fructose syrup (C*Sweet F 017Y4) containing 22% water, 55% mono and disaccharides and 23% other solids. 38DE is a spray-dried glucose syrup (C*Dry GL 01934) containing 5% water, 36.5% mono and disaccharides and 58.5% other solids. 28DE is a spray-dried glucose syrup (C*Dry GL01924) containing 4% water, 14% mono and disaccharides and 82% other solids.

Mixes were prepared as follows. Water at 80°C was added into a tank equipped with a turbo mixer. The dry sugars were mixed with the stabilisers and added to the tank followed by the skimmed milk powder, liquid sugars, oil and flavours. The mix was blended for about 10 minutes at 60-70°C. The mix was then homogenised at 150 bar and pasteurised at 82°C for 25 seconds in a plate heat exchanger. The mix was then cooled to 4°C in the plate heat exchanger and aged overnight in an ageing tank at 4°C, with gentle stirring.

Mixes 1-5 were aerated (target overrun 100%) and frozen in an ice cream freezer (Crepaco WO4 scraped surface heat exchanger) fitted with a series 15 open dasher. The resulting ice creams were labelled examples 1-5. Mix 2 was also aerated and frozen using a series 80 closed dasher and the resulting ice cream was labelled example 6. Partially frozen ice cream was drawn from the freezer into 500 ml cardboard boxes. The draw temperature is controlled by the load on the motor which rotates the dasher. The motor load is coupled with the refrigerating power, so that they are increased together. Thus higher motor load allows the rotating dasher to churn more viscous partially frozen ice cream, so that the ice cream can be drawn from the freezer at a lower temperature. The actual draw temperature depends on the ice cream formulation. Motor loads of 30%, 60% and 85% were used, corresponding to draw temperatures in the range -4.4 to - 8.3°C. These are summarised in Table 2. Finally, the ice cream was hardened by blast freezing at -35°C for 3 hours and stored at -25°C prior to testing.

Table 2 Draw temperatures

| Motor Load (%) | Draw temperature (°C) | | | | | |
|---|---|---|---|---|---|---|
| Example | 1 | 2 | 3 | 4 | 5 | 6 |
| 30 | -5.8 | -5.0 | -5.3 | -4.8 | -4.4 | -5.6 |
| 60 | -7.4 | -6.3 | -6.6 | -6.0 | -5.6 | -6.6 |
| 85 | -8.3 | -7.1 | -7.4 | -6.6 | -6.2 | -7.6 |

The mixes all processed very well through the ice cream freezer, both when the open dasher and the closed dasher were used. The ice cream flow was generally smooth and continuous with few air pockets. The overrun was measured on leaving the freezer using an overrun cup as described above. All of the ice creams achieved the target overrun of 100% (+/- 5%). All of the ice creams were acceptable when eaten. They had a smooth texture and creamy flavour, and melted quite rapidly in the mouth. These examples show that palatable and stable aerated frozen confections can be prepared that contain significant amounts of polyunsaturated fat provided that the frozen aerated confection is drawn from the freezer below -4.0°C and that emulsifier is not used.

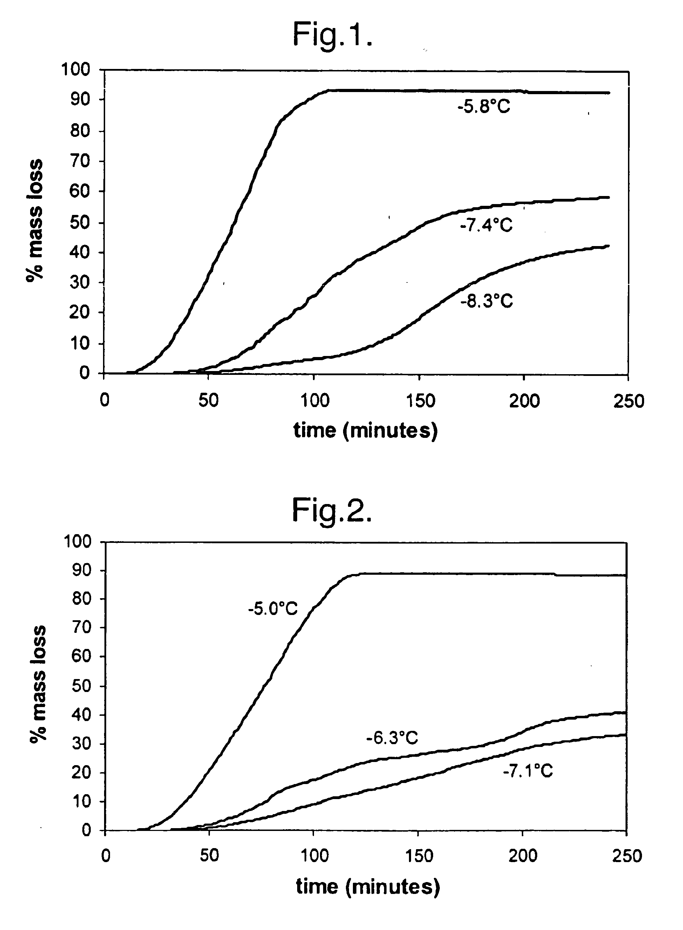

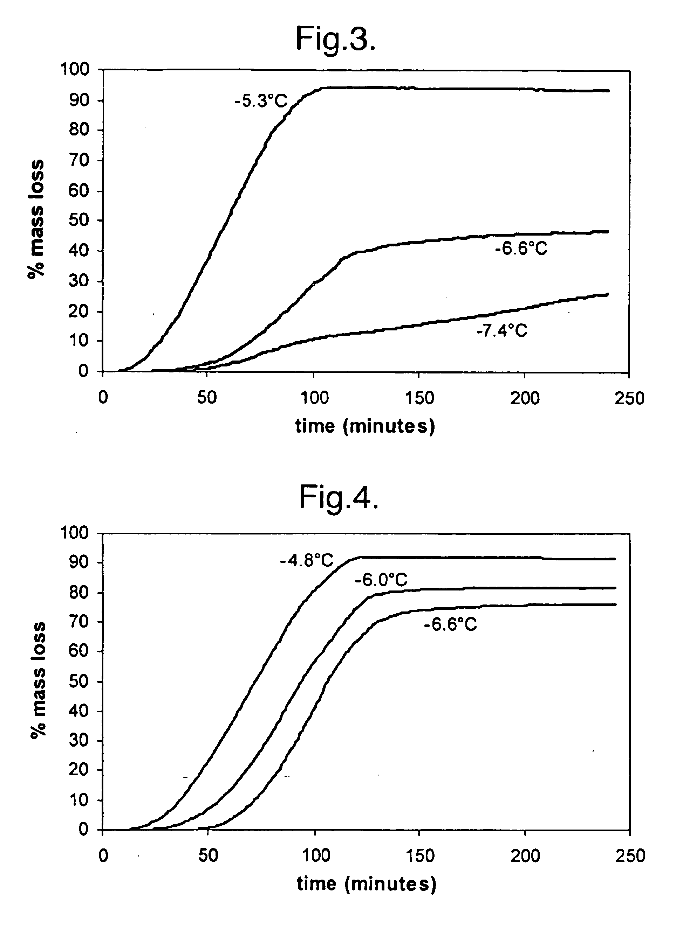

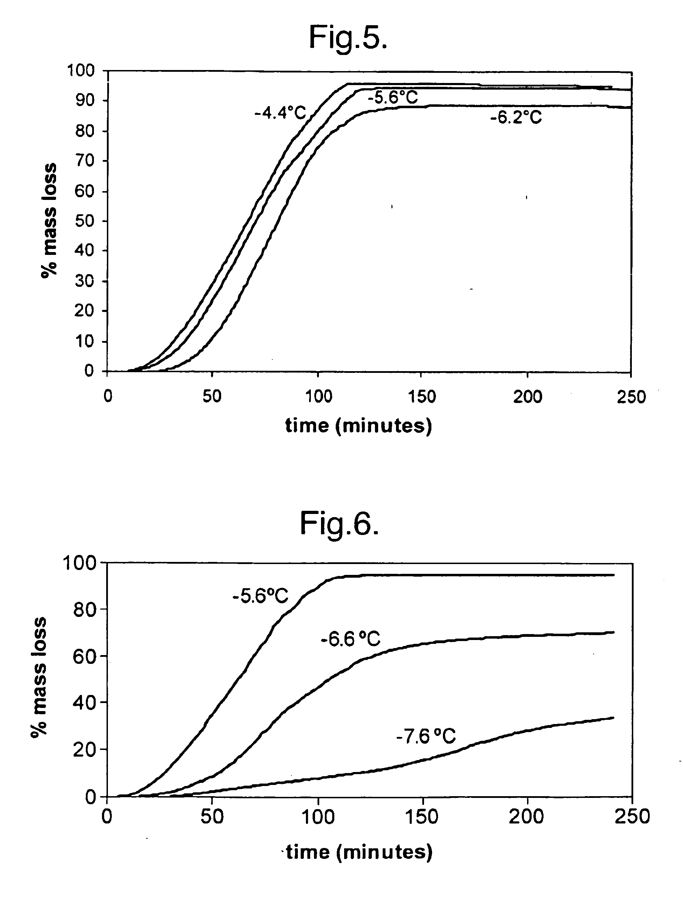

Meltdown tests as described above were performed on each sample. The meltdown data are plotted in figures 1-6. Figure 1 shows that for formulation 1, the meltdown behaviour improves (i.e. the ice cream loses mass more slowly) as the draw temperature is reduced. Figure 2 shows that for formulation 2 (using different sweeteners), the meltdown behaviour again improves as the draw temperature is reduced. Figures 3 to 6 show similar results for formulations 3 (higher solids), 4 (different source of milk protein), 5 (reduced fat level) and 6 (closed dasher). In each case, the slowest meltdown is achieved with the lowest draw temperature.

Table 3 shows the draw temperature and meltdown initiation time for each sample. It is apparent from this data that ice creams made with a fat high in PUFA have longer meltdown initiation times when they have been drawn from the freezer at lower temperatures. The lowest draw temperature (-8.3°C for formulation 1) had the longest meltdown initiation time (90 minutes).

Table 3 Draw temperature and meltdown initiation time for each sample.

| Formulation | Draw temperature (°C) | Meltdown initiation time (minutes) |
|---|---|---|
| 1 | -5.8 | 24 |
|  | -7.4 | 63 |
|  | -8.3 | 90 |
| 2 | -5.0 | 30 |
|  | -6.3 | 68 |
|  | -7.1 | 77 |
| 3 | -5.3 | 21 |
|  | -6.6 | 55 |
|  | -7.4 | 73 |
| 4 | -4.8 | 23 |
|  | -6.0 | 45 |
|  | -6.6 | 62 |
| 5 | -4.4 | 21 |
|  | -5.6 | 31 |
|  | -6.2 | 40 |
| 6 | -5.6 | 19 |
|  | -6.6 | 39 |
|  | -7.6 | 63 |

Ice creams produced with low draw temperatures were also preferred by an informal taste panel. In summary, these results show that ice creams made with a fat high in PUFA and no emulsifier have improved meltdown properties and texture when they are drawn from the ice cream freezer at relatively low temperatures. The lower the draw temperature, the slower the meltdown.

The various features of the embodiments of the present invention referred to in individual sections above apply, as appropriate, to other sections *mutatis mutandis*. Consequently features specified in one section may be combined with features specified in other sections as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. A frozen aerated confection comprising water; a fat component in an amount of 2 to 12% by weight of the frozen aerated confection wherein at least 35% by weight of the fatty acids in the fat component are polyunsaturated; less than 0.04% emulsifier by weight of the frozen confection; milk protein; and sweetener; **characterised in that** the frozen aerated confection has an overrun of from 60 to 200%.

2. A frozen aerated confection according to claim 1 which contains no emulsifier.

3. A frozen aerated confection according to claim 1 or claim 2 wherein the fat component comprises at least 80% by weight of the fat of a vegetable oil selected from the group consisting of sunflower oil, safflower oil, linseed oil, soybean oil, walnut oil, corn oil, grape seed oil, sesame oil, wheat germ oil, cottonseed oil and mixtures thereof

4. A frozen aerated confection according to claim 3 wherein the fat component is sunflower oil.

5. A frozen aerated confection according to any preceding claim wherein the fat component constitutes from 4 to 10% by weight of the frozen aerated confection.

6. A frozen aerated confection according to any preceding claim having an overrun of from 80 to 130%.

7. A frozen aerated confection according to any preceding claim wherein the milk protein constitutes from 1 to 8% by weight of the frozen aerated confection.

8. A frozen aerated confection according to any preceding claim wherein the sweetener constitutes from 10 to 35% by weight of the frozen aerated confection.

9. A frozen aerated confection according to any preceding claim wherein the free sugars constitute less than 17% by weight of the frozen aerated confection.

10. A process for manufacturing a frozen aerated confection comprising the steps of:

    a) producing a mix comprising water; a fat component in an amount of 2 to 12% by weight of the frozen aerated confection wherein at least 35% by weight of the fatty acids in the fat component are polyunsaturated; less than 0.04% emulsifier by weight of the frozen confection; milk protein; and sweetener;
    b) homogenising and pasteurising the mix;
    c) freezing and aerating the mix in an ice cream freezer to form a frozen aerated confection; and
    d) drawing the frozen aerated confection from the ice cream freezer

    **characterized in that** the frozen aerated confection has an overrun of from 60 to 200% and is drawn from the ice cream freezer at a temperature of below -4.0°C .

11. A process according to claim 10 wherein the frozen aerated confection contains no emulsifier.

12. A process according to claim 10 or 11 wherein the frozen aerated confection is drawn from the ice cream freezer at a temperature of below -6.5°C.

13. A process according to any of claims 10 to 12 further comprising hardening the frozen aerated confection after step (d).

14. A product obtainable by the methods of claims 10 to 13.


**Patentansprüche**

1. Gefrorene geschäumte Süßware, umfassend Wasser; eine Fettkomponente in einer Menge von 2 bis 12 Gewichts-% der gefrorenen geschäumten Süßware, wobei wenigstens 35 Gewichts-% der Fettsäuren in der Fettkomponente mehrfach ungesättigte sind; weniger als 0,04 Gewichts-%, bezogen auf die gefrorene Süßware, Emulgator; Milchprotein und Süßungsmittel, **dadurch gekennzeichnet, dass** die gefrorene geschäumte Süßware einen Aufschlag von 60 bis 200 % hat.

**2.** Gefrorene geschäumte Süßware nach Anspruch 1, die keinen Emulgator enthält.

**3.** Gefrorene geschäumte Süßware nach Anspruch 1 oder Anspruch 2, wobei die Fettkomponente wenigstens 80 Gewichts-%, bezogen auf das Fett, ein Pflanzenöl umfasst, das aus der Gruppe, bestehend aus Sonnenblumenöl, Safloröl, Leinsamenöl, Sojabohnenöl, Walnussöl, Maisöl, Traubenkernöl, Sesamöl, Weizenkeimöl, Baumwollsamenöl und Gemischen davon, ausgewählt ist.

**4.** Gefrorene geschäumte Süßware nach Anspruch 1, wobei die Fettkomponente Sonnenblumenöl ist.

**5.** Gefrorene geschäumte Süßware nach einem vorangehenden Anspruch, wobei die Fettkomponente 4 bis 10 Gewichts-% der gefrorenen geschäumten Süßware ausmacht.

**6.** Gefrorene geschäumte Süßware nach einem der vorangehenden Ansprüche, das einen Aufschlag von 80 bis 130 % hat.

**7.** Gefrorene geschäumte Süßware nach einem vorangehenden Anspruch, wobei das Milchprotein 1 bis 8 Gewichts-% der gefrorenen geschäumten Süßware ausmacht.

**8.** Gefrorene geschäumte Süßware nach einem vorangehenden Anspruch, wobei das Süßungsmittel 10 bis 35 Gewichts-% der gefrorenen geschäumten Süßware ausmacht.

**9.** Gefrorene geschäumte Süßware nach einem vorangehenden Anspruch, wobei die freien Zucker weniger als 17 Gewichts-% der gefrorenen geschäumten Süßware ausmachen.

**10.** Verfahren zur Herstellung einer gefrorenen geschäumten Süßware, umfassend die Schritte:

a) Herstellen einer Mischung, umfassend Wasser; eine Fettkomponente in einer Menge von 2 bis 12 Gewichts-% der gefrorenen geschäumten Süßware, wobei wenigstens 35 Gewichts-% der Fettsäuren in der Fettkomponente mehrfach ungesättigt sind; weniger als 0,04 Gewichts-%, bezogen auf die gefrorene Süßware, Emulgator; Milchprotein und Süßungsmittel;
b) Homogenisieren und Pasteurisieren der Mischung;
c) Gefrieren und Schäumen der Mischung in einem Eiscreme-Gefriergerät, um eine gefrorene geschäumte Süßware zu bilden, un
d) Ziehen der gefrorenen geschäumten Süßware aus dem Eiscreme-Gefriergerät,

**dadurch gekennzeichnet, dass** die gefrorene geschäumte Süßware einen Aufschlag von 60 bis 200 % hat und bei einer Temperatur von unter -4 °C aus dem Eiscreme-Gefriergerät gezogen wird.

**11.** Verfahren nach Anspruch 10, wobei die gefrorene geschäumte Süßware keinen Emulgator enthält.

**12.** Verfahren nach Anspruch 10 oder 11, wobei die gefrorene geschäumte Süßware aus dem Eiscreme-Gefriergerät einer Temperatur von unter -6,5 °C gezogen wird.

**13.** Verfahren nach einem der Ansprüche 10 bis 12, das außerdem ein Härten der gefrorenen geschäumten Süßware nach Schritt d) umfasst.

**14.** Produkt, erhältlich durch die Verfahren nach den Ansprüchen 10 bis 13.

**Revendications**

**1.** Préparation glacée aérée comprenant de l'eau, un composant gras dans une quantité représentant 2 à 12 % en poids de la préparation glacée aérée dans laquelle au moins 35 % en poids des acides gras contenus dans le composant gras sont polyinsaturés, moins de 0,04 % d'émulsifiant en poids de la préparation glacée, de la protéine de lait et un édulcorant, **caractérisée en ce que** la préparation glacée aérée présente un foisonnement de 60 à 200 %.

**2.** Préparation glacée aérée selon la revendication 1 ne contenant pas d'émulsifiant.

3. Préparation glacée aérée selon la revendication 1 ou la revendication 2, dans laquelle le composant gras comprend au moins 80 % en poids de graisse d'une huile végétale choisie dans le groupe constitué par l'huile de tournesol, l'huile de carthame, l'huile de lin, l'huile de soja, l'huile de noix, l'huile de maïs, l'huile de pépin de raisin, l'huile de sésame, l'huile de germe de blé, l'huile de coton et des mélanges de celles-ci.

4. Préparation glacée aérée selon la revendication 3, dans laquelle le composant gras est l'huile de tournesol.

5. Préparation glacée aérée selon l'une quelconque des revendications précédentes, dans laquelle le composant gras constitue 4 à 10 % en poids de la préparation glacée aérée.

6. Préparation glacée aérée selon l'une quelconque des revendications précédentes ayant un foisonnement de 80 à 130 %.

7. Préparation glacée aérée selon l'une quelconque des revendications précédentes, dans laquelle la protéine de lait constitue 1 à 8 % en poids de la préparation glacée aérée.

8. Préparation glacée aérée selon l'une quelconque des revendications précédentes, dans laquelle l'édulcorant constitue 10 à 35 % en poids de la préparation glacée aérée.

9. Préparation glacée aérée selon l'une quelconque des revendications précédentes, dans laquelle les sucres libres constituent moins de 17 % en poids de la préparation glacée aérée.

10. Procédé de fabrication d'une préparation glacée aérée comprenant les étapes de :

a) production d'un mélange comprenant de l'eau, un composant gras dans une quantité représentant 2 à 12 % en poids de la préparation glacée aérée dans lequel au moins 35 % en poids des acides gras contenus dans le composant gras sont polyinsaturés, moins de 0,04 % d'émulsifiant en poids de la préparation glacée, de la protéine de lait et un édulcorant ;
b) homogénéisation et pasteurisation de mélange ;
c) congélation et aération du mélange dans une sorbetière pour former une préparation glacée aérée ; et
d) retrait de la préparation glacée aérée de la sorbetière,

**caractérisé en ce que** la préparation glacée aérée présente un foisonnement de 60 à 200 % et **en ce qu'**elle est retirée de la sorbetière à une température inférieure à -4,0°C.

11. Procédé selon la revendication 10, dans lequel la préparation glacée aérée ne contient pas d'émulsifiant.

12. Procédé selon la revendication 10 ou 11, dans lequel la préparation glacée aérée est retirée de la sorbetière à une température inférieure à -6,5°C.

13. Procédé selon l'une quelconque des revendications 10 à 12, comprenant en outre le durcissement de la préparation glacée aérée après l'étape (d).

14. Produit susceptible d'être obtenu par les procédés des revendications 10 à 13.

## Fig.1.

## Fig.2.

## Fig.3.

## Fig.4.

# Fig.5.

# Fig.6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9730600 A
- JP 57036944 A
- EP 1212948 A2
- JP 57068742 A

### Non-patent literature cited in the description

- **R.T. MARSHALL ; H.D. GOFF ; R.W. HARTEL.** Ice Cream. Kluwer Academic / Plenum Publishers, 2003, vol. 36, 42-43
- **C. CLARKE.** The Science of Ice Cream. Royal Society of Chemistry, 2004, 46-4862-73
- Ice Cream. 190
- *The Science of Ice Cream,* 75
- **FRANK D GUNSTONE ; JOHN L HARWOOD ; FRED B PADLEY.** The Lipid Handbook. Chapman & Hall, 1994
- Diet, nutrition and the prevention of chronic diseases. Report of a Joint WHO/FAO Expert Consultation. 2003
- Ice Cream. 85-86